# EUROPEAN PATENT SPECIFICATION

(11) **EP 3 201 267 B1**
(45) Date of publication and mention of the grant of the patent: **13.06.2018**
(21) Application number: 15784464.8
(22) Date of filing: 29.09.2015
(51) Int. Cl.: C08L 7/00, B60C 1/00, C08L 9/00, C08L 9/06

(54) **TYRE FOR VEHICLE WHEELS**
REIFEN FÜR FAHRZEUGRÄDER
PNEU POUR ROUES DE VÉHICULE

(30) Priority: 30.09.2014 IT MI20141710
(43) Date of publication of application: 09.08.2017
(73) Proprietor: Pirelli Tyre S.p.A., 20126 Milano (IT)
(72) Inventor: DE CANCELLIS, Pierluigi, I-20126 Milano (MI) (IT); RATTI, Giuseppina, I-20126 Milano (MI) (IT); PARAZZOLI, Francesco, I-20126 Milano (MI) (IT); BAIONE, Francesca, I-20126 Milano (MI) (IT)
(74) Representative: Allaix, Roberto
(86) International application number: PCT/IB2015/001739
(87) International publication number: WO 2016/051257

(56) References cited:
- EP-A1- 0 589 291
- EP-A1- 0 747 428
- EP-A1- 1 092 565
- EP-A2- 0 863 027
- WO-A1-02/102566
- GB-A- 1 151 679
- US-A1- 2008 216 934
- DATABASE CA [Online] CHEMICAL ABSTRACTS SERVICE, COLUMBUS, OHIO, US; 20 August 2012 (2012-08-20), DING, YUHUA ET AL: "Trans-isoprene rubber compositions for inflated tire inner liners", XP002739114, retrieved from STN Database accession no. 157:384726 -& CN 102 634 084 A (TRIANGLE GROUP CO LTD) 15 August 2012 (2012-08-15)

## Description

The present invention relates to a tyre for vehicle wheels.

A tyre for vehicle wheels typically comprises a carcass structure, a belt structure arranged in a radially outer position with respect to the carcass structure and a tread band arranged in a radially outer position with respect to the belt structure, through which the tyre makes contact with the roadbed.

Both the carcass structure and the belt structure typically comprise a plurality of reinforcing cords, made of textile or metallic material, incorporated in a matrix of elastomeric material.

The green tyre is made by assembling respective semi-finished materials of elastomer mixture. Following production of the green tyre, a treatment of molding and vulcanizing is generally carried out for the purpose of structural stabilization of the tyre by crosslinking the elastomer mixtures as well as impressing a desired tread pattern on the tread band.

The semi-finished materials may be produced in the form of elongated elements as continuous strips of elastomeric material, optionally reinforced with metallic and/or textile elements of elongated shape. Typically, before they are used for tyre manufacture, some semi-finished materials may be stored by winding in superposed concentric turns, carried out for example on reels.

### PRIOR ART

A problem connected with the storage of semi-finished materials in strips made of unvulcanized (green) elastomeric polymers wound on reels is connected with the typical stickiness of the green elastomeric polymer that leads to adhesion of turns of the semi-finished material placed in contact, making it difficult - if not completely impractical industrially - to unwind the whole semi-finished material from the storage reels.

The applicant has observed that to avoid the aforementioned drawback, during unwinding of a semi-finished material stored on reels, it is advisable to provide interposition of a thermoplastic separating material between the turns or incorporate an anti-adhesion ingredient in the elastomer mixture.

The problem of reducing the adhesion between the turns of a semi-finished material wound on reels has already been faced, for example in WO 99/62695, US 5,004,635 and more recently in WO 2002102566, in the name of the applicant.

WO 2002102566 describes a semi-finished material, obtained by crosslinking a crosslinkable elastomer composition comprising a polyalkenamer, which displays little adhesiveness when stored in the form of continuous strip on reels.

The use of trans-1,4-polybutadiene or trans-1,4-polyisoprene in elastomeric compositions for several different purposes is described in, for example, EP1092565A1, EP0589291A1, EP0863027A2, EP0747428A1 and US2008216934A1.

Moreover, elastomer compositions for tyres were described for example in US20140088240, US20130133803, US5284195, GB1151679, GB1199825, US3484405 and US3639525.

### SUMMARY OF THE INVENTION

Although the tyre obtained according to the teachings of WO 2002102566 in the name of the applicant gives satisfactory results, both from the standpoint of low adhesiveness of the semi-finished material used in the manufacture of the green product, and from the standpoint of tyre performance, with a view to continuous improvement of production and of tyre performance, the applicant faced the problem of improving the green strength of the semi-finished materials used in tyre manufacture (in particular the semi-finished materials stored in the form of continuous strip on reels), at the same time maintaining or possibly improving the good results in terms of tyre performance but without incurring the drawbacks associated with semi-finished materials during storage thereof.

The applicant found that the use of a crosslinkable elastomer composition comprising trans-1,4-polyisoprene makes it possible to solve the aforementioned problem.

The documents of the prior art suggested the use of trans-1,4-polyisoprene in compositions with low adhesiveness for increasing the adhesiveness of the composition simultaneously with the green strength.

The applicant instead observed, surprisingly, that strips of elastomeric material obtained by coating the reinforcing cords with a crosslinkable composition, comprising natural rubber, a butadiene copolymer, and trans-1,4-polyisoprene, showed a reduced mutual adhesiveness, even lower than the adhesiveness exhibited by the composition described in WO 2002102566. This feature makes this composition particularly suitable for the preparation of semi-finished materials to be stored on reels, used in the process of tyre building.

Moreover, the crosslinkable composition comprising trans-1,4-polyisoprene of the invention displayed after vulcanization, unexpectedly in view of the results obtained when unvulcanized, improved adhesiveness with respect to the reinforcing cords. This feature makes this composition particularly suitable for the preparation of semi-finished materials (for example strip) comprising reinforcing cords.

The applicant finally observed that the tyre comprising an element made with the crosslinkable composition of the invention showed excellent performance in terms of strength at high speeds and fatigue strength.

The applicant noted that, like trans-1,4-polyisoprene, trans-1,4-polybutadiene also has a melting point well below the temperatures normally reached during mixing of the elastomeric polymers (typically at least 110°-120°C). The two diene polymers have relatively similar melting points (67°C and 44°C respectively). Therefore these diene polymers may melt when mixed intimately with other polymers in a mixture owing to the high temperatures of mixing, and then recrystallize at least partially at room temperature. The applicant theorized that owing to this mechanism, together with the possibility of crosslinking typical of diene polymers, it would be possible to obtain in a mixture, with trans-1,4-polyisoprene and/or with trans-1,4-polybutadiene, very low adhesiveness and high green strength.

In a first aspect, the present invention relates to a tyre for vehicle wheels comprising at least one element made from a semi-finished material in the form of strip comprising a crosslinked elastomeric material obtained by crosslinking a crosslinkable elastomer composition comprising a polymer base consisting of:
(a) cis-1,4-polyisoprene natural rubber;
(b) a butadiene (co)polymer;
(c) at least one diene polymer selected from the group consisting of trans-1,4-polyisoprene and trans-1,4-polybutadiene.

Preferably, said element is made in the form of continuous strip of said elastomer composition.

Preferably said element incorporates reinforcing cords.

According to one embodiment, the tyre for vehicle wheels comprises at least:
- a carcass structure having opposed side edges associated with corresponding bead structures;
- a belt structure applied in a radially outer position with respect to said carcass structure; and
- a tread band applied in a radially outer position with respect to said belt structure.

Preferably, said element is a reinforcing layer of the belt structure arranged in a radially outer position of said belt structure.

Advantageously, said reinforcing layer comprises a plurality of said reinforcing cords.

Preferably, said reinforcing layer comprises reinforcing cords arranged with a substantially zero angle, preferably with an angle between 0° and 6°, relative to a direction parallel to an equatorial plane of the tyre.

Preferably, the reinforcing cords are arranged substantially parallel and side by side to form a plurality of turns. These turns are substantially oriented in the circumferential direction (typically with an angle between 0° and 6°), this direction usually being stated as "zero-degrees" with reference to its disposition relative to the equatorial plane of the tyre.

Preferably, said element comprising the elastomeric material described above is the zero-degrees reinforcing layer of the belt structure.

Preferably, said reinforcing cords are textile cords. More preferably, said cords are of fibers of rayon, nylon, polyester, for example polyethylene terephthalate (PET) or polyethylene naphthalate (PEN), aromatic polyamides (aramids) and/or hybrid cords comprising combinations of said fibers. Alternatively said cords are metallic.

Typically, in the zero-degrees reinforcing layer of the belt structure, nylon and/or hybrid cords are used (for example nylon-aramid or nylon-rayon or aramid-rayon).

Preferably, the trans-1,4-polyisoprene and the trans-1,4-polybutadiene used in the present invention are diene polymers of high grade trans, with a high degree of monomer units represented respectively by the following formulae.

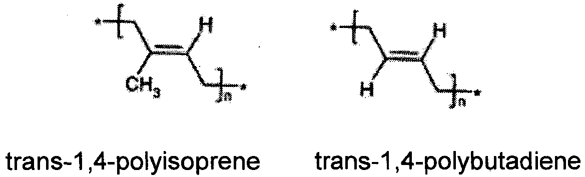

The expression "high degree trans" means that at least 80% of the monomer units are disposed in trans position as illustrated in the above formulae.

Preferably, said natural rubber (a) is present in an amount of from 20 to 80 phr, preferably from 30 to 60 phr.

Preferably, said butadiene (co)polymer (b) is present in an amount of from 10 to 60 phr, preferably from 30 to 50 phr.

Preferably, said at least one diene polymer (c) is present in an amount of from 5 to 30 phr, more preferably from 5 to 25 phr.

Preferably, the butadiene (co)polymer (b) that can be used in the present invention may be selected, for example, from: polybutadiene (in particular polybutadiene with a high content of 1,4-cis), 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

Advantageously, the butadiene (co)polymer (b) that can be used in the present invention may be selected, for example, from styrene/1,3-butadiene copolymers and styrene/isoprene/1,3-butadiene copolymers.

Advantageously, the diene polymer (c) that can be used in the present invention is trans-1,4-polyisoprene, preferably trans-1,4-polyisoprene TP-MV60 or TP-MV40 produced by Exsino Chemical Co. Ltd. (Shanghai, China) or TP-301 produced by Kurakai Co. Ltd. (Tokyo, Japan).

In a second aspect, the present invention relates to a semi-finished material in the form of strip suitable for the production of tyres for vehicle wheels, comprising a crosslinkable elastomer composition comprising a polymer base consisting of:
(a) cis-1,4-polyisoprene natural rubber;
(b) a butadiene (co)polymer;
(c) at least one diene polymer selected from the group consisting of trans-1,4-polyisoprene and trans-1,4-polybutadiene.

Preferably, the semi-finished material of the present invention comprises at least one reinforcing cord coated with, or incorporated in, said crosslinkable elastomer composition.

According to a third aspect, the present invention also relates to a process for producing and storing a semi-finished material in strip form made of crosslinkable elastomeric material, which includes:
- preparing an elastomeric composition;
- forming said elastomeric composition to obtain a semi-finished material in strip form;
- winding up said semi-finished material in strip form on a storage reel;
characterized in that said elastomeric composition comprises a polymeric base consisting of:
(a) cis-1,4-polyisoprene natural rubber;
(b) a butadiene (co)polymer; and
(c) at least one dienic polymer selected from the group consisting of trans-1,4-polyisoprene and trans-1,4-poly butadiene.

According to a further aspect, the present invention relates to a process for producing tyres for vehicle wheels, said process comprising the following stages:
- manufacturing a green tyre comprising at least one element made of crosslinkable elastomeric material, said element being obtained by unwinding a semi-finished material in strip form from a storage reel and then coiling said material onto a building drum;
- molding the green tyre in a molding cavity defined in a vulcanizing mold;
- crosslinking the elastomeric material by heating the tyre to a given temperature for a given time;
in which said element made of crosslinkable elastomeric material comprises a polymeric base consisting of:
(a) cis-1,4-polyisoprene natural rubber;
(b) a butadiene (co)polymer; and
(c) at least one dienic polymer selected from the group consisting of trans-1,4-polyisoprene and trans-1,4-poly butadiene.

"Equatorial plane" of the tyre means a plane perpendicular to the rotation axis of the tyre and dividing the tyre into two symmetrically equal parts.

The terms "radial" and "axial" and the expressions "radially inner/outer" and "axially inner/outer" are used in reference to a direction perpendicular and in a direction parallel to the rotation axis of the tyre, respectively. Conversely, the terms "circumferential" and "circumferentially" are used in reference to the direction of annular development of the tyre, i.e. to the direction of rolling of the tyre, which corresponds to a direction lying on a plane coincident with or parallel to the equatorial plane of the tyre.

The term "elastomeric material" means a composition comprising at least one elastomeric polymer and at least one reinforcing filler. Preferably, this composition further comprises additives such as, for example, a crosslinking agent and/or a plasticizer. Owing to the presence of the crosslinking agent, this material can be crosslinked by heating.

The term "cord" or the expression "reinforcing cord" means an element consisting of one or more filiform elements (also called "threads" hereinafter). Depending on the circumstances and the specific applications, the aforementioned filiform elements may be made of textile and/or metallic material.

In a preferred embodiment, said crosslinkable elastomer composition may further comprise at least one reinforcing filler.

The reinforcing filler may be selected from those commonly used in this sector, for example carbon black, alumina, silica, aluminosilicates, calcium carbonate, kaolin and the like or mixtures thereof.

According to a preferred embodiment, the reinforcing filler is carbon black, selected from those having a surface area greater than 40 m²/g, preferably greater than 50 m²/g, more preferably greater than 60 m²/g (determined by STSA (statistical thickness surface area) according to standard ISO 18852:2005). Preferably, said surface area is less than 150 m²/g, more preferably less than 120 m²/g. The applicant found that by using carbon black with surface area in the ranges given above in the present vulcanizable elastomer compositions, an increase in the reinforcing effect conferred by the filler is obtained.

Suitable examples of carbon black are Carbon Black of ASTM grade such as N220, N234, N326, N375 marketed by numerous manufacturers such as Columbian, Cabot or Evonik.

According to a preferred embodiment, said carbon black reinforcing filler is present in the elastomer composition in an amount between 0.1 phr and 120 phr, preferably between 20 phr and 90 phr, more preferably between 40 and 80 phr.

According to one embodiment, the silica that can be used may be a pyrogenic silica or, preferably, a precipitated silica, having a BET surface area (measured according to standard ISO 5794/1) generally between 50 and 300 m²/g.

According to another preferred embodiment, said crosslinkable elastomer composition may further comprise a silane coupling agent. Said silane coupling agent is able to interact with silica and bind it to the elastomeric polymer during vulcanization.

Preferably, said silane coupling agent is present in the crosslinkable elastomer composition in an amount from 0 phr to about 10 phr, preferably from about 0.5 phr to about 5 phr.

Coupling agents that are preferably used are those based on silane, which can be identified for example by the following structural formula (I):

(R)₃Si-CₜH₂ₜX (I)

in which the groups R, which may be identical or different, are selected from: alkyl, alkoxy or aryloxy groups or from halogen atoms, provided that at least one of the groups R is an alkoxy or aryloxy group; t is an integer between 1 and 6 inclusive; X is a group selected from: nitroso, mercapto, amino, epoxide, vinyl, imide, chloro, -(S)ᵤCₜH₂ₜ-Si-(R)₃ or -S-COR in which u and t are integers from 1 to 6 inclusive, and the groups R are as defined above.

The coupling agents that are particularly preferred include bis(3-triethoxysilylpropyl)tetrasulphide and bis(3-triethoxysilylpropyl)disulphide. Said coupling agents may be used as they are or as a suitable mixture with an inert filler (for example carbon black) so as to facilitate their incorporation in the crosslinkable elastomer composition.

The crosslinkable elastomer compositions may be vulcanized by the known techniques, in particular with sulphur-based vulcanizing systems commonly used for elastomeric polymers. For this purpose, in the elastomer compositions, after one or more steps of thermomechanical treatment, a sulphur-based vulcanizing agent is incorporated together with vulcanization accelerators and activators. In the final treatment step, the temperature is generally kept below 120°C and preferably below 100°C, in order to avoid any undesirable pre-crosslinking phenomenon.

The vulcanizing agent used most advantageously is sulphur, or molecules containing sulphur (sulphur donors), with activators and accelerators known by a person skilled in the art.

Advantageously, said crosslinkable elastomer composition comprises an amount of vulcanizing agent, expressed in phr of sulphur, greater than 0.5 phr, preferably greater than or equal to 1.5 phr. Preferably, the amount of vulcanizing agent, expressed in phr of sulphur, is less than or equal to 8 phr, more preferably less than or equal to 5 phr.

The activators that are particularly effective are zinc compounds and in particular ZnO, ZnCO₃, zinc salts of saturated or unsaturated fatty acids containing from 8 to 18 carbon atoms, such as, for example, zinc stearate, which are preferably formed in situ in the elastomer composition from ZnO and fatty acid, as well as BiO, PbO, Pb₃O₄, PbO₂, or mixtures thereof.

The accelerators that are commonly used may be selected from: dithiocarbamates, guanidine, thiourea, thiazoles, sulphenamides, thiurams, amines, xanthates or mixtures thereof.

The total amount of the vulcanizing system and of the agents that make it up can be modified as is known in the art as a function of the final crosslink density required.

Said elastomer compositions may comprise other additives commonly used, selected on the basis of the specific application for which the composition is intended. For example, the following may be added to said materials: antioxidants, anti-ageing agents, plasticizers, adhesives, anti-ozone agents, modifying resins, or mixtures thereof.

In particular, for the purpose of further improving the processability, a plasticizer may be added to said elastomer composition, generally selected from mineral oils, vegetable oils, synthetic oils or mixtures thereof, such as, for example, aromatic oil, naphthenic oil, phthalates, soya oil or mixtures thereof. The amount of plasticizer is generally between 0 phr and 70 phr, preferably between 3 phr and 20 phr.

In the present invention, said crosslinkable elastomeric material preferably comprises at least one methylene donor compound.

According to a preferred embodiment, said at least one methylene donor compound may be any compound which, when heated during vulcanization, is able to react with the methylene acceptor used in the elastomer composition.

Examples of suitable methylene donors comprise, but are not limited to, hexamethylenetetramine (HEXA or HMT), hexamethoxymethylenemelamine (HMMM), hexamethylol melamine, N,N'-dimethylolurea, N-methylol dicyanamide, N-allyldioxazine, N-phenyldioxazine, N-methylol-acetamide, N-methylol-butyramide, N-methylol-acrylamide, N-methylol-succinimide, lauryl oxymethylpyridine chloride, ethoxymethylpyridine chloride, trioxane hexamethoxymethylmelamine, as described for example in US3751331, preferably HMMM.

The methylene donor is usually present in concentrations from about 0.5 to 15 phr, preferably from 0.5 to 10 phr.

In the present invention, said crosslinkable elastomeric material preferably comprises at least one methylene acceptor compound.

According to a preferred embodiment, said at least one methylene acceptor compound may be any compound able to react during vulcanization with the methylene donor used in the elastomer composition.

Examples of suitable methylene acceptors comprise, but are not limited to, phenolic resins derived from the reaction of phenol and/or phenols substituted with formaldehyde.

The term "phenolic resin" means the class of polymers obtained by reaction between phenol and formaldehyde.

The aforementioned elastomer compositions can be prepared by mixing together the polymeric components and the reinforcing filler and the other additives optionally present, according to the techniques known in this field. Mixing may be carried out, for example, using an open mixer of the "open-mill" type or an internal mixer of the type with tangential rotors (Banbury™) or with intermeshing rotors (Intermix®), or in continuous mixers of the Ko-Kneader™ type or of the twin-screw or multiscrew type.

Once the crosslinkable elastomeric composition has been prepared, said composition is formed so as to obtain a semi-finished material in strip form, for example in the form of a tape or band. The forming of the elastomeric material may be carried out by straining, profiling, calendering or extrusion. The operating conditions under which the process is performed depend on the particular semi-finished material which it is desired to obtain and are known to those skilled in the art. In the case of forming a band it is necessary to bring about coupling between the elastomeric material and the reinforcing elements (threads, cords or fibers): in this case also, the techniques used and the operating conditions under which the process is performed depend on the particular semi-finished material which it is desired to obtain and are known to those skilled in the art.

The semi-finished material in strip form made of crosslinkable elastomeric material which is thus obtained is then subjected to a stage of cooling which may be carried out in various ways such as, for example: immersing said semi-finished material in a cooling liquid, for example water at room temperature; or passing said semi-finished material over a series of coiled tubes in which cold water circulates.

Once cooled, the semi-finished material in strip form made of elastomeric material is wound on a storage reel.

At the time of use, the abovementioned semi-finished material wound on the storage reel can be unwound and used without any problems arising, and, when used for manufacturing tyres, it can adhere to the underlying elements both during manufacture and in the finished tyre.

Further features and advantages will become clearer from the detailed description of a preferred, but not exclusive, embodiment of a tyre for vehicle wheels, according to the present invention.

The description will be presented below, referring to the drawings, supplied purely for illustrative purposes, and therefore non-limiting, in which:

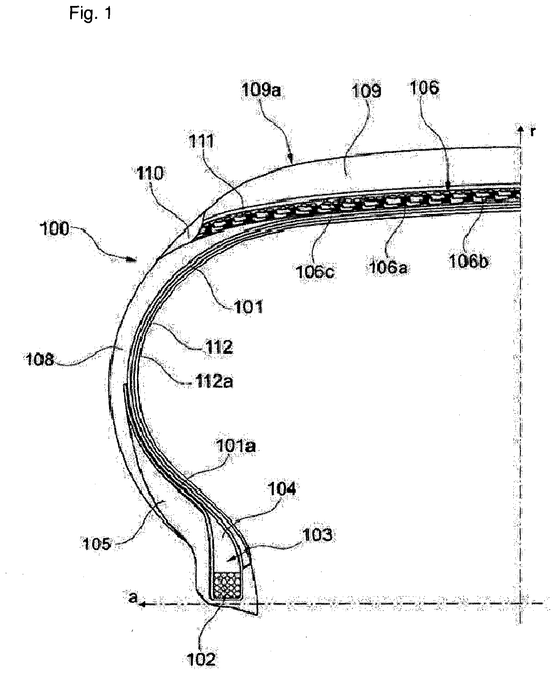

- Figure 1 illustrates a tyre for vehicle wheels, in radial half-section.

In Figure 1, "at" indicates an axial direction and "r" indicates a radial direction. For simplicity, Fig. 1 shows only one portion of the tyre, the other portion not shown being identical and arranged symmetrically relative to the radial direction "r" that defines the trace of the equatorial plane of the tyre.

The tyre 100 comprises at least one carcass structure 101, comprising in its turn at least one carcass layer 101a.

In the following, for simplicity of presentation, reference will be made to an embodiment of the tyre 100 comprising just one carcass layer 101a, it being understood, however, that what is described finds analogous application in tyres comprising more than one carcass layer.

The carcass layer 101a has axially opposed end edges in engagement with annular anchoring structures 102, called bead wires, optionally associated with an elastomeric filler 104. The zone of the tyre comprising the bead wire 102 and the elastomeric filler 104 forms an annular reinforcing structure 103 called "bead", intended to allow anchorage of the tyre 100 on a corresponding assembly rim, not shown.

The carcass layer 101a comprises a plurality of reinforcing elements (not shown) coated with elastomeric material or incorporated in a matrix of crosslinked elastomeric material.

The carcass structure 101 is of the radial type, i.e. the reinforcing elements of the carcass layer 101a are located on planes comprising the rotation axis of the tyre 100 and substantially perpendicular to the equatorial plane of the tyre 100. Said reinforcing elements generally consist of textile cords, for example of rayon, nylon, polyester, polyethylene naphthalate (PEN), but it is not excluded that they may consist of metallic cords.

Each annular reinforcing structure 103 is joined to the carcass structure 101 by folding back (or wrapping) of opposed side edges of the at least one carcass layer 101a around the bead wire 102, in order to form the so-called backfolds of the carcass structure 101.

In one embodiment, coupling between the carcass structure 101 and the annular reinforcing structure 103 may be achieved with a second carcass layer (not shown in Fig. 1) applied in an axially outer position relative to the carcass layer 101a.

An anti-abrasive strip 105 is arranged in order to wrap the annular reinforcing structure 103 along the axially inner and outer and radially inner zones of the annular reinforcing structure 103, thus being interposed between the latter and the wheel rim when the tyre 100 is mounted on the rim. This anti-abrasive strip 105 may, however, not be provided.

A belt structure 106 comprising one or more belt layers 106a, 106b arranged in radial superposition relative to one another is provided in a radially outer position with respect to the carcass structure 101.

The layers 106a, 106b comprise a plurality of reinforcing cords. These reinforcing cords preferably have a cross orientation relative to the circumferential direction of the tyre 100.

In a radially more outer position with respect to the belt layers 106a, 106b, at least one reinforcing layer 106c is provided, commonly known as "zero-degrees belt".

This layer incorporates a plurality of reinforcing cords oriented in a substantially circumferential direction. These cords thus form an angle of a few degrees (typically less than about 10°, for example between about 0° and about 6°) relative to a direction parallel to the equatorial plane of the tyre 100. The reinforcing layer 106c is preferably produced by winding a semi-finished material around the belt layers 106a, 106b previously placed on a support, not shown. The semi-finished material may be a single rubberized cord or a strip of elastomeric material comprising a plurality of cords side by side axially. Preferably, the number of cords in a strip is between 5 and 15.

The turns may be close together corresponding to longitudinal edges proper or may be partially superposed along an axial direction of the tyre.

The textile materials most commonly used as constituents of cords for belt structures of tyres may be polymer fibers of natural origin such as for example rayon and lyocell, or synthetic fibers such as for example the aliphatic polyamides (nylon), the polyesters and the aromatic polyamides (known generically as aramids), alone or combined together to form hybrid yarns. Typically, nylon and/or hybrid cords (for example nylon-aramid or nylon-rayon or aramid-rayon) are used in the zero-degrees reinforcing layer 106c of the belt structure.

These materials may be selected in relation to the element in which they will be incorporated and the type of tyre (for vehicles with two or four wheels; for heavy vehicles) and depending on the performance required, for example HP (high performance), UHP (ultrahigh performance), competition, on-road or off-road.

The cords used in the zero-degrees reinforcing layer 106c are embedded in an elastomer matrix obtained by crosslinking a crosslinkable elastomer composition comprising a polymer base consisting of: (a) cis-1,4-polyisoprene natural rubber; (b) a butadiene (co)polymer; (c) a diene polymer selected from the group consisting of trans-1,4-polyisoprene and trans-1,4-polybutadiene.

A tread band 109 of elastomeric material is applied in a radially outer position with respect to the belt structure 106.

Corresponding sidewalls 108 of elastomeric material are moreover applied on the side surfaces of the carcass structure 101, in axially outer position with respect to the carcass structure 101 itself. Each sidewall 108 extends from one of the side edges of the tread band 109 until it is in alignment with the respective annular reinforcing structure 103.

The tread band 109 has, in a radially outer position, a rolling surface 109a that is intended to come into contact with the ground. Circumferential grooves are formed on the rolling surface 109a, and are connected by transverse cuts (not shown in Fig. 1) to define a plurality of blocks of various shapes and dimensions on the rolling surface 109a. For simplicity, the rolling surface 109a is shown smooth in Fig. 1.

An underlayer 111 is arranged between the belt structure 106 and the tread band 109.

In some specific embodiments, such as that illustrated and described here, a strip consisting of elastomeric material 110, commonly known as "mini-sidewall", may optionally be present in the connecting zone between the sidewalls 108 and the tread band 109. The mini-sidewall is generally obtained by co-extrusion with the tread band 109 and gives an improvement in mechanical interaction between the tread band 109 and the sidewalls 108.

Preferably, an end portion of the sidewall 108 directly covers the side edge of the tread band 109.

In the case of tubeless tyres, a rubber layer 112, generally known as a "liner", may also be provided in a radially inner position with respect to the carcass structure 101 to provide the necessary impermeability to the air inflating the tyre 100. A layer of elastomeric material, underliner 112a, may also be provided in a radially outer position with respect to said liner 112.

Manufacture of the tyre 100 as described above is carried out by assembling the respective semi-finished materials on at least one building drum, not shown, by at least one assembly device.

For example, a plant for making tyres 100 comprises a carcass manufacturing line, in correspondence with which building drums are moved among various stations for supply of semi-finished materials prearranged for forming, on each building drum, a carcass sleeve comprising: the liner 112, the carcass structure 101, the annular anchoring structures 102 and optionally at least one part of the sidewalls 108.

Simultaneously, in a line for manufacturing outer sleeves, one or more auxiliary drums are moved sequentially among various work stations set up for forming, on each auxiliary drum, an outer sleeve comprising at least the belt structure 106, the tread band 109, and optionally at least one part of the sidewalls 108.

The plant further comprises an assembly station, for joining the outer sleeve to the carcass sleeve.

Some of the aforementioned semi-finished materials are produced in the form of continuous strip, and before being used in the industrial production of tyres they may be wound in the form of concentric turns superposed around a cylindrical surface, for example the core of a storage reel.

Winding on storage reels may be performed using separating means of non-stick material (for example, sheets of polyethylene or of polyester) which prevent the wound turns adhering to one another, making it extremely difficult, if not impossible, to detach them from one another especially after prolonged storage. Moreover, detachment of superposed turns, between which sizeable adhesive forces have developed, would make it necessary to exert a high pulling force, which might alter the geometric dimensions of the semi-finished materials themselves, or even cause them to break.

In other cases, for example in the production of the zero-degrees reinforcing layer 106c, it is possible to use semi-finished materials in the form of strip wound on a reel without interposition of separating means.

In such cases, the elastomeric material must have reduced adhesiveness. This problem is solved by the elastomeric material described above, comprising trans-1,4-polyisoprene and/or trans-1,4-polybutadiene.

In the tyre building step, the strip incorporating the reinforcing cords is unwound from the storage reel and is laid down in the form of adjacent or at least partially superposed turns in a radially outer position with respect to belt layers 106a, 106b, previously positioned on a suitable building support such as for example a previously positioned drum or sleeve, in order to arrange the reinforcing cords substantially in parallel and circumferentially.

Following manufacture of the green tyre 100, a treatment of molding and vulcanizing is carried out for the purpose of providing structural stabilization of the tyre 100 by crosslinking the elastomer compounds, as well as impressing a desired tread pattern on the tread band 109 and impressing any distinctive graphical symbols on the sidewalls 108.

The present invention will be further illustrated below by means of a number of examples of preparation, which are provided purely for purposes of illustration and do not limit this invention in any way.

### Example 1 - Preparation of the mixes

Mixes A-E having the compositions shown in Table 1 were prepared as follows.

All the components, with the exception of sulphur and accelerator, were mixed in an internal mixer (model Pomini PL 1.6) for about 5 minutes (1st step), maintaining the temperature in the range 145 ± 5°C until discharge. Then the sulphur and the accelerator were added, and mixing was carried out in an open roller mixer (2nd step).

The amounts shown in Table 1 are expressed in phr.

**Table 1**

| COMPOUND | A(*) | B | C | D | E |
|---|---|---|---|---|---|
| 1st step | | | | | |
| SIR 20 | 45.00 | 47.00 | 45.00 | 43.00 | 39.00 |
| E-SBR 1500 | 40.00 | 42.00 | 40.00 | 38.00 | 35.00 |
| Polyoctenamer | 15.00 | - | - | - | - |
| TPI | - | 11.00 | 15.00 | 19.00 | 26.00 |
| Carbon black | 60.00 | 60.00 | 60.00 | 60.00 | 60.00 |
| Stearic acid | 1.50 | 1.50 | 1.50 | 1.50 | 1.50 |
| ZnO | 5.00 | 5.00 | 5.00 | 5.00 | 5.00 |
| Zn salts | 2.00 | 2.00 | 2.00 | 2.00 | 2.00 |
| 6PPD | 2.00 | 2.00 | 2.00 | 2.00 | 2.00 |
| Crosslinkable adhesive system based on methylene acceptor + methylene donor | 3.50 | 3.50 | 3.50 | 3.50 | 3.50 |
| 2nd step | | | | | |
| Accelerator | 1.25 | 1.25 | 1.25 | 1.25 | 1.25 |
| Sulphur | 2.80 | 2.80 | 2.80 | 2.80 | 2.80 |

| | | | | | |
|---|---|---|---|---|---|
| (*) comparison | | | | | |

| | |
|---|---|
| SIR 20: | Natural rubber. |
| E-SBR 1500: | Styrene/1,3-butadiene copolymer, obtained by emulsion polymerization, containing 23 wt% styrene. |
| Polyoctenamer: | Vestenamer 0812 from Evonik Degussa GmbH High Performance Polymers (Marl, Germany). |
| TPI: | TP-MV60 from Exsino Chemical Co. Ltd. (Shanghai, China) |
| Carbon black: | N326 from Birla Group (India). |
| Stearic acid: | Radiacid 444 from Oleon nv (Belgium). |
| ZnO: | Zinc oxide from Norzinco GmbH (Germany). |
| Zn salts: | Struktol A50 from Schill&Seilacher GmbH (Germany). |
| 6PPD: | Santoflex6PPD from Eastman Chemical Co. (USA) |
| Methylene acceptor: | Resorcinol from Sumitomo Chemical Co. Ltd. (Japan) |
| Methylene donor: | Cyrez 964 from Allnex Belgium SA. |
| Accelerator: | Vulkacit CZ from LANXESS Deutschland GmbH (Germany). |
| Sulphur: | Multisperse S-IS70P from Omya SpA (Italy). |

The Mooney viscosity ML (1+4) at 100°C was measured according to standard ISO 289-1:2005.

The static mechanical properties (modulus at 50% elongation [E50%], modulus at 100% elongation [E100%], tensile strength [TS], elongation at break [EB]) were measured according to standard UNI 6065:2001 on specimens of the aforementioned elastomeric materials, vulcanized at 170°C for 10 minutes.

The green strength was measured according to standard ISO 9026:2007, evaluating modulus at 50% elongation [E50%], modulus at 100% elongation [E100%], secant modulus [E(1-10%)], tensile strength [TS], elongation at break [EB].

Finally, the green adhesiveness was evaluated. The test consists of manual measurement of the separating force between two green surfaces of the same mixture, having dimensions of 200x100x1 mm, held together in contact manually for 10 seconds. The samples tested were ascribed qualitative values indicating low tendency to adhere positively ("=" for adhesion equal to the reference and from + to +++ in proportion to the decrease in adhesiveness, from a value + equivalent to a result that identified adhesion slightly less than the reference up to +++ identifying adhesion well below the reference).

The results are given in the following Table 2.

**Table 2**

| | A(*) | B | C | D | E |
|---|---|---|---|---|---|
| Mooney viscosity | 50.3 | 63.2 | 63.8 | 64.9 | 67.6 |

| Green strength 23°C | | | | | |
|---|---|---|---|---|---|
| E50%[MPa] | 0.59 | 1.07 | 0.97 | 1.50 | 2.84 |
| E100%[MPa] | 0.64 | 2.00 | 1.60 | 2.79 | 5.48 |
| E(1-10%)[MPa] | 2.87 | 3.21 | 3.84 | 5.23 | 9.56 |

| | A(*) | B | C | D | E |
|---|---|---|---|---|---|
| TS[MPa] | 1.21 | 2.76 | 2.70 | 3.97 | 5.83 |
| EB[%] | 812 | 359 | 426 | 260 | 178 |
| | | | | | |
| Green adhesiveness | = | + | ++ | ++ | +++ |

| Static mechanical properties after vulcanization | | | | | |
|---|---|---|---|---|---|
| E50%[MPa] at 23°C | 2.90 | 2.72 | 2.55 | 2.35 | 2.62 |
| E100%[MPa] | 4.99 | 4.91 | 4.56 | 4.16 | 4.59 |
| TS[MPa] | 17.68 | 18.15 | 17.53 | 17.32 | 15.89 |
| EB[%] | 316 | 311 | 316 | 330 | 287 |

| | | | | | |
|---|---|---|---|---|---|
| (*) comparison | | | | | |

The results of the tests showed that mixtures B, C, D and E on the one hand displayed, in the green state, properties better than the reference (A), for example, in the green strength values of the moduli of elongation at 50% and at 100% (E 50%, E 100%) and of tensile strength (TS) and in the value of green adhesiveness (the larger the amount of TPI the better), and on the other hand showed behavior in line with the reference (A) in the static properties of the vulcanized material.

With particular reference to mixture C, it was noted that in the green state this showed the best balance between increase in green strength (E100%), not excessive, and adhesiveness, relative to the reference mixture A, and proved to have good processability. After vulcanization, mixture C showed mechanical properties in line with those of the reference.

### Example 2 - Evaluation of defects from adhesion during storage

The sample strip-shaped element used for the reinforcing layer, comprising the elastomer composition as described above comprising the diene polymer TP-MV60 (mixture C), and a comparative strip-shaped element used for the reinforcing layer in the normal production of tyres comprising the polyoctenamer (mixture A), were obtained in the form of 2 strips respectively, each with a length of 1440 meters and thickness of 0.9±0.05 mm and width of 12.7±0.5 mm, by extruding the elastomeric material around textile cords made of nylon, each cord being monofilament with linear density of 1400 dtex (140 g/km). The strips wound on reels were then stored for 3 days, before being used for tyre building.

During unwinding from the reels, the sections with excessive stickiness or with derubberizing of the cords were cut out, measured for length and discarded. The results are summarized in the following Table 3.

**Table 3**

| | Storage time | Amount scrapped | |
|---|---|---|---|
| | | Sample strips mixture C | Sample strips mixture A (*) |
| strip 1 | 3 days | 110 m | 150 m |
| strip 2 | | 120 m | 150 m |

| | | | |
|---|---|---|---|
| (*) comparison | | | |

The results obtained demonstrated, through reduced presence of defects, that the sample strip-shaped element comprising mixture C as described above showed reduced adhesiveness during unwinding after storage wound on reels for a certain period, relative to the reinforcing layer obtained with a composition (mixture A) comprising polyoctenamer, giving better processability in terms of feed of the device for laying down the semi-finished material on the drum owing to the reduced presence of scrap.

### Example 3 - Peeling test

The adhesion force between the rubber and the textile cords was determined by measuring, with a dynamometer, the force required to separate two layers of rubberized fabric, vulcanized in known conditions.

Two layers of this rubberized fabric were superposed along the principal direction of the cords and were co-vulcanized for 40 minutes at 143°C, after introducing, for about the first 3 cm in the direction transverse to the cords, a sheet of inert film (e.g. Mylar™) that is to constitute, at the end of vulcanization, a lead-in zone to the opening of the two layers of rubberized fabric by means of a dynamometer.

The vulcanized composite thus obtained was divided with an automatic cutting machine, in the principal direction of the cords, into three strips of 20x210 mm.

These strips, conditioned at the temperature of the laboratory (20°C, 65% RH), were separated, starting from the lead-in zone, by pulling with a Zwick Roell Z020 dynamometer, at a speed of 50 mm/min.

The graph of the loads was recorded throughout the pulling.

The mean detachment load was determined for each strip. The average of the values for three test specimens, expressed in newton (N), represents the value of the static damage by peeling.

The results are given in the following Table 4.

**Table 4**

| Mixture | Peeling (N) |
|---|---|
| A(*) | 187 |
| C | 222 |

| | |
|---|---|
| (*) comparison | |

The results obtained demonstrated that the reinforcing layer comprising a mixture C showed, unexpectedly in view of the results for green adhesiveness described above, better adhesion between the rubber and the textile cords relative to the reinforcing layer obtained with a composition comprising mixture A with polyoctenamer.

### Example 4 - Test of integrity at high speed

The test of integrity at high speed was performed using two different types of tyres comprising the zero-degrees belts made with elastomeric material comprising mixture C as described above.

The first test was carried out on 245/45 R18 100Y tyres, inflated to a pressure of 3.2 bar, rotating the tyre on a drum with diameter of 2 meters under a load of 662 kg. The test is carried out with a camber angle equal to 2°.

The speed of the tyre was increased to 240 km/h and maintained for 60 minutes; then the speed was increased by 10 km/h every 10 minutes, until tyre breakage.

The second test was carried out on 205/65 R15 94H tyres, inflated to a pressure of 2.7 bar, rotating the tyre on a drum with diameter of 2 meters under a 543-kg load. The test is carried out with camber angle equal to 2°.

The speed of the tyre was increased to 210 km/h and maintained for 60 minutes; then the speed was increased by 10km/h every 10 minutes, until tyre breakage.

The tests ended when the tyre showed damage or showed defects such as lacerations or breaks.

The results are given in the following Table 5.

**Table 5**

| Tyre | Integrity at high speed |
|---|---|
| 245/45 R18 100Y | 310km/h for 127 min |
| 205/65 R15 94H | 230km/h for 80 min |

### Example 5 - Test of fatigue endurance

The test of fatigue endurance was carried out on 245/45 R18 100Y and 205/65 R15 94H tyres comprising the zero-degrees belts made with elastomeric material comprising mixture C as described above.

The tyres were inflated to a pressure of 3.2 bar, and the test was carried out by rotating each tyre on a drum with a diameter of 2 meters at a fixed speed of 120 km/h. The load applied on the tyres was 1215 kg and 1018 kg, respectively.

The test was carried out by starting up the testing apparatus and stopping it every 12 hours to check whether the tyres had any damage. The results are expressed as total hours of fatigue endurance. The test was considered terminated in the case of serious damage or tyre breakage.

The results are given in the following Table 6.

**Table 6**

| Tyre | Fatigue endurance |
|---|---|
| 245/45 R18 100Y | 120h |
| 205/65 R15 94H | 132h |

The results obtained provide evidence of high integrity at high speed and fatigue endurance of the tyres of the present invention comprising the zero-degrees belts made with elastomeric material comprising mixture C as described above.

The values reached in the tests were well beyond the established limits for integrity at high speed and fatigue endurance stipulated for normal production.

The present invention has been described above with reference to some embodiment examples, but various changes may be made while remaining within the scope of protection defined by the claims. For example the applicant considers that in the elastomer composition comprised in the tyre element, trans-1,4-polybutadiene could be used in addition to or as an alternative to trans-1,4-polyisoprene, as it has a melting point similar to that of trans-1,4-polyisoprene and well below the temperatures normally reached during mixing of the elastomeric polymers (typically at least 110-120°C), so as to provide substantially the same effects. Moreover, it is not ruled out that other elements of the tyre, with or without reinforcing cords, could be made with the elastomeric material described above comprising trans-1,4-polyisoprene and/or trans-1,4-polybutadiene.

## Claims

1. Tyre for vehicle wheels comprising at least one element made from a semi-finished material in the form of strip comprising a crosslinked elastomeric material obtained by crosslinking a crosslinkable elastomeric composition comprising a polymer base consisting of:
(a) cis-1,4-polyisoprene natural rubber;
(b) a butadiene (co)polymer; and
(c) at least one diene polymer selected from the group consisting of trans-1,4-polyisoprene and trans-1,4-polybutadiene,
wherein said element incorporates reinforcing cords.

2. Tyre for vehicle wheels according to Claim 1, wherein said tyre for vehicle wheels comprises at least:
- a carcass structure having opposed side edges associated with corresponding bead structures;
- a belt structure applied in a radially outer position with respect to said carcass structure; and
- a tread band applied in a radially outer position with respect to said carcass structure.

3. Tyre for vehicle wheels according to Claim 2, wherein said element is a reinforcing layer of the belt structure arranged in a radially outer position of said belt structure.

4. Tyre for vehicle wheels according to Claim 3, wherein said element comprises reinforcing cords arranged with a substantially zero angle, preferably with an angle ranging from 0° to 6°, with respect to a direction parallel to an equatorial plane of the tyre.

5. Tyre for vehicle wheels according to any one of Claims 2 to 4, wherein said reinforcing cords comprise textile reinforcing cords in fibers of rayon, nylon, polyester (polyethylene terephthalate (PET) or polyethylene naphthalate (PEN)), aromatic polyamides (aramids) and/or hybrid cords comprising combinations of said fibers.

6. Tyre for vehicle wheels according to any one of preceding claims, wherein said polymeric base comprises said natural rubber (a) in an amount of from 20 to 80 phr, preferably from 30 to 60 phr.

7. Tyre for vehicle wheels according to any one of preceding claims, wherein said polymeric base comprises said butadiene (co)polymer (b) in an amount of from 10 to 60 phr, preferably from 30 to 50 phr.

8. Tyre for vehicle wheels according to any one of preceding claims, wherein said polymeric base comprises said diene polymer (c) in an amount of from 5 to 30 phr, preferably from 5 to 25 phr.

9. Tyre for vehicle wheels according to any one of preceding claims, wherein said diene polymer (c) is high grade trans wherein at least 80% of the monomer units are disposed in trans position.

10. Semi-finished material in the form of strip suitable for the production of tyres for vehicle wheels comprising a crosslinkable elastomeric composition comprising a polymer base consisting of:
(a) cis-1,4-polyisoprene natural rubber;
(b) a butadiene (co)polymer; and
(c) at least one diene polymer selected from the group consisting of trans-1,4-polyisoprene and trans-1,4-polybutadiene,
wherein said semi-finished material comprises at least a reinforcing cord coated with, or incorporated in said crosslinkable elastomeric composition.

11. A process for producing and storing a semi-finished material in strip form made of crosslinkable elastomeric material and comprising at least a reinforcing cord coated with, or incorporated in said crosslinkable elastomeric composition, which includes:
- preparing an elastomeric composition;
- forming said elastomeric composition to obtain a semi-finished material in strip form;
- winding up said semi-finished material in strip form on a storage reel;
**characterized in that** said elastomeric composition comprises a polymeric base consisting of:
(a) cis-1,4-polyisoprene natural rubber;
(b) a butadiene (co)polymer; and
(c) at least one dienic polymer selected from the group consisting of trans-1,4-polyisoprene and trans-1,4-poly butadiene.

12. A process for producing tyres for vehicle wheels, said process comprising the following stages:
- manufacturing a green tyre comprising at least one element made of crosslinkable elastomeric material, said element being obtained by unwinding a semi-finished material in strip form comprising at least a reinforcing cord coated with, or incorporated in said crosslinkable elastomeric material from a storage reel and then coiling said material onto a building drum;
- molding the green tyre in a molding cavity defined in a vulcanizing mold;
- crosslinking the elastomeric material by heating the tyre to a given temperature for a given time;
in which said element made of crosslinkable elastomeric material comprises a polymeric base consisting of:
(a) cis-1,4-polyisoprene natural rubber;
(b) a butadiene (co)polymer; and
(c) at least one dienic polymer selected from the group consisting of trans-1,4-polyisoprene and trans-1,4-poly butadiene.

## Patentansprüche

1. Reifen für Fahrzeugräder umfassend zumindest ein Element aus einem halbfertigen Material in der Form von Streifen, die ein vernetztes Elastomermaterial umfassen, das durch Vernetzen einer vernetzbaren Elastomerzusammensetzung erhalten wird, die eine Polymerbasis umfasst, bestehend aus:
(a) cis-1,4-Polyisopren-Naturkautschuk;
(b) einem Butadien-(Co)Polymer; und
(c) zumindest einem Dien-Polymer ausgewählt aus der Gruppe bestehend aus trans-1,4-Polyisopren und trans-1,4-Polybutadien,
wobei das Element Verstärkungskorde umfasst.

2. Reifen für Fahrzeugräder nach Anspruch 1, wobei der Reifen für Fahrzeugräder zumindest folgendes umfasst:
- eine Karkassenstruktur mit gegenüberliegenden Seitenrändern, die entsprechenden Wulststrukturen zugeordnet sind;
- eine Gürtelstruktur, die in Bezug auf die Karkassenstruktur in einer radial äußeren Position angelegt ist; und
- einen Laufflächenring, der in einer radial äußeren Position in Bezug auf die Karkassenstruktur aufgebracht ist.

3. Reifen für Fahrzeugräder nach Anspruch 2, wobei das Element eine Verstärkungsschicht der Gürtelstruktur ist, die in einer radial äußeren Position der Gürtelstruktur angeordnet ist.

4. Reifen für Fahrzeugräder nach Anspruch 3, wobei das Element Verstärkungskorde umfasst, die mit einem Winkel von im Wesentlichen null, vorzugsweise mit einem Winkel im Bereich von 0° bis 6°, in Bezug auf eine Richtung parallel zu einer Äquatorialebene des Reifens angeordnet sind.

5. Reifen für Fahrzeugräder nach einem der Ansprüche 2 bis 4, wobei die Verstärkungskorde textile Verstärkungskorde aus Fasern aus Rayon, Nylon, Polyester (Polyethylenterephthalat (PET) oder Polyethylennaphthalat (PEN)), aromatischen Polyamiden (Aramiden) und/oder Hybridkorde umfassend Kombinationen dieser Fasern umfassen.

6. Reifen für Fahrzeugräder nach einem der vorhergehenden Ansprüche, wobei die polymere Basis den Naturkautschuk (a) in einer Menge von 20 bis 80 phr, vorzugsweise von 30 bis 60 phr, umfasst.

7. Reifen für Fahrzeugräder nach einem der vorhergehenden Ansprüche, wobei die polymere Basis das Butadien-(Co)Polymer (b) in einer Menge von 10 bis 60 phr, vorzugsweise von 30 bis 50 phr, umfasst.

8. Reifen für Fahrzeugräder nach einem der vorhergehenden Ansprüche, wobei die polymere Basis das Dien-Polymer (c) in einer Menge von 5 bis 30 phr, vorzugsweise von 5 bis 25 phr, umfasst.

9. Reifen für Fahrzeugräder nach einem der vorhergehenden Ansprüche, wobei das Dien-Polymer (c) hochgradig trans ist, wobei zumindest 80 % der Monomereinheiten in der trans-Stellung angeordnet sind.

10. Halbfertiges Material in der Form von Streifen, das geeignet ist zur Herstellung von Reifen für Fahrzeugräder umfassend eine vernetzbare Elastomerzusammensetzung, die eine Polymerbasis umfasst, bestehend aus:
(a) cis-1,4-Polyisopren-Naturkautschuk;
(b) einem Butadien-(Co)Polymer; und
(c) zumindest einem Dien-Polymer ausgewählt aus der Gruppe bestehend aus trans-1,4-Polyisopren und trans-1,4-Polybutadien.
wobei das halbfertige Material zumindest einen Verstärkungskord umfasst, der mit der vernetzbaren Elastomerzusammensetzung beschichtet oder in diese inkorporiert ist.

11. Verfahren zur Herstellung und Lagerung eines halbfertigen Materials in Streifenform aus einem vernetzbaren Elastomermaterial und umfassend zumindest einen Verstärkungskord, der mit der vernetzbaren Elastomerzusammensetzung beschichtet oder in diese inkorporiert ist, wobei das Verfahren umfasst:
- Vorbereiten einer Elastomerzusammensetzung;
- Formen der Elastomerzusammensetzung, um ein halbfertiges Material in Streifenform zu erhalten;
- Aufwickeln des halbfertigen Materials in Streifenform auf eine Speicherrolle;
**dadurch gekennzeichnet, dass** die Elastomerzusammensetzung eine Polymerbasis umfasst, bestehend aus:
(a) cis-1,4-Polyisopren-Naturkautschuk;
(b) einem Butadien-(Co)Polymer; und
(c) zumindest einem Dien-Polymer ausgewählt aus der Gruppe bestehend aus trans-1,4-Polyisopren und trans-1,4-Polybutadien.

12. Verfahren zur Herstellung von Reifen für Fahrzeugräder, wobei das Verfahren die folgenden Stufen umfasst:
Herstellen eines Rohreifens umfassend zumindest ein Element aus einem vernetzbaren Elastomermaterial, wobei das Element durch Abwickeln eines halbfertigen Materials in Streifenform, das zumindest einen Verstärkungskord umfasst, der mit dem vernetzbaren Elastomermaterial beschichtet oder in dieses inkorporiert ist, von einer Speicherrolle und anschließendes Aufwickeln auf eine Fertigungstrommel erhalten wird;
Formen des Rohreifen in einem Formhohlraum, der durch eine Vulkanisierform definiert wird;
Vernetzen des Elastomermaterials durch Erwärmen des Reifens auf eine gegebene Temperatur für eine gegebene Zeit:
wobei das Element aus einem vernetzbaren Elastomermaterial eine Polymerbasis umfasst, bestehend aus:
(a) cis-1,4-Polyisopren-Naturkautschuk;
(b) einem Butadien-(Co)Polymer; und
(c) zumindest einem dienischen Polymer ausgewählt aus der Gruppe bestehend aus trans-1,4-Polyisopren und trans-1,4-Polybutadien.

## Revendications

1. Pneu pour roues de véhicule comprenant au moins un élément réalisé en un matériau semi-fini sous forme de bande comprenant un matériau élastomère réticulé obtenu par réticulation d'une composition élastomère réticulable comprenant une base polymère constituée :
(a) de caoutchouc naturel de cis-1,4-polyisoprène ;
(b) d'un (co)polymère de butadiène ; et
(c) d'au moins un polymère diénique choisi dans le groupe constitué du trans-1,4-polyisoprène et du trans-1,4-polybutadiène,
dans lequel ledit élément comprend des câblés de renforcement.

2. Pneu pour roues de véhicule selon la revendication 1, dans lequel ledit pneu pour roues de véhicule comprend au moins :
- une structure de carcasse ayant des bords latéraux opposés associés à des structures de talon correspondantes ;
- une structure de ceinture appliquée dans une position radialement extérieure par rapport à ladite structure de carcasse ; et
- une bande de roulement appliquée dans une position radialement extérieure par rapport à ladite structure de carcasse.

3. Pneu pour roues de véhicule selon la revendication 2, dans lequel ledit élément est une couche de renforcement de la structure de ceinture agencée dans une position radialement extérieure de ladite structure de ceinture.

4. Pneu pour roues de véhicule selon la revendication 3, dans lequel ledit élément comprend des câblés de renforcement agencés selon un angle sensiblement nul, de préférence selon un angle compris entre 0° et 6°, par rapport à une direction parallèle à un plan équatorial du pneu.

5. Pneu pour roues de véhicules selon l'une quelconque des revendications 2 à 4, dans lequel lesdits câblés de renforcement comprennent des câblés de renforcement textiles en fibres de rayonne, de nylon, de polyester (polyéthylène téréphtalate (PET) ou polyéthylène naphtalate (PEN)), de polyamides aromatiques (aramides) et/ou des câblés hybrides comprenant des combinaisons desdites fibres.

6. Pneu pour roues de véhicule selon l'une quelconque des revendications précédentes, dans lequel ladite base polymère comprend ledit caoutchouc naturel (a) en une quantité comprise entre 20 et 80 phr, de préférence entre 30 et 60 phr.

7. Pneu pour roues de véhicule selon l'une quelconque des revendications précédentes, dans lequel ladite base polymère comprend ledit (co)polymère de butadiène (b) en une quantité comprise entre 10 et 60 phr, de préférence entre 30 et 50 phr.

8. Pneu pour roues de véhicule selon l'une quelconque des revendications précédentes, dans lequel ladite base polymère comprend ledit polymère diénique (c) en une quantité comprise entre 5 et 30 phr, de préférence entre 5 et 25 phr.

9. Pneu pour roues de véhicule selon l'une quelconque des revendications précédentes, dans lequel ledit polymère diénique (c) est à forte proportion de trans dans lequel au moins 80% des motifs monomères sont disposés en position trans.

10. Matériau semi-fini sous la forme d'une bande appropriée pour la production de pneus pour roues de véhicules comprenant une composition élastomère réticulable comprenant une base polymère constituée :
(a) de caoutchouc naturel de cis-1,4-polyisoprène ;
(b) d'un (co)polymère de butadiène ; et
(c) d'au moins un polymère diénique choisi dans le groupe constitué du trans-1,4-polyisoprène et du trans-1,4-polybutadiène,
dans lequel ledit matériau semi-fini comprend au moins un câblé de renforcement revêtu de, ou incorporé dans ladite composition élastomère réticulable.

11. Procédé de production et de stockage d'un matériau semi-fini sous forme de bande réalisée en un matériau élastomère réticulable et comprenant au moins un câblé de renforcement revêtu de, ou incorporé dans ladite composition élastomère réticulable, qui comporte le fait :
- de préparer une composition élastomère ;
- de former ladite composition élastomère pour obtenir un matériau semi-fini sous forme de bande ;
- d'enrouler ledit matériau semi-fini sous forme de bande sur une bobine de stockage ;
**caractérisé en ce que** ladite composition élastomère comprend une base polymère constituée :
(a) d'un caoutchouc naturel de cis-1,4-polyisoprène ;
(b) d'un (co)polymère de butadiène ; et
(c) d'au moins un polymère diénique choisi dans le groupe consistant en le trans-1,4-polyisoprène et le trans-1,4-polybutadiène.

12. Procédé de production de pneus pour roues de véhicule, ledit procédé comprenant les étapes suivantes consistant :
- à fabriquer un pneu cru comprenant au moins un élément réalisé en un matériau élastomère réticulable, ledit élément étant obtenu en déroulant un matériau semi-fini sous forme de bande comprenant au moins un câblé de renforcement revêtu de, ou incorporé dans ledit matériau élastomère réticulable à partir d'une bobine de stockage puis en enroulant ledit matériau sur un tambour de confection ;
- à mouler le pneu cru dans une cavité de moulage définie dans un moule de vulcanisation ;
- à réticuler le matériau élastomère en chauffant le pneu jusqu'à une température donnée pendant un temps donné ;
dans lequel ledit élément réalisé en un matériau élastomère réticulable comprend une base polymère constituée :
(a) d'un caoutchouc naturel de cis-1,4-polyisoprène ;
(b) d'un (co)polymère de butadiène ; et
(c) d'au moins un polymère diénique choisi dans le groupe constitué du trans-1,4-polyisoprène et du trans-1,4-polybutadiène.
